# FASCICULE DE BREVET EUROPEEN

(11) **EP 0 755 010 B1**
(45) Date de publication et mention de la délivrance du brevet: **30.05.2001**
(21) Numéro de dépôt: 96401354.4
(22) Date de dépôt: 20.06.1996
(51) Int. Cl.: G06F 11/20

(54) **Dispositif d'interface entre un calculateur à architecture redondante et un moyen de communication**
Schnittstelleneinrichtung zwischen einem Rechner redundanter Architektur und einem Kommunikationsmittel
Interface device between a computer with redundant architecture and a communication means

(30) Priorité: 19.07.1995 FR 9508845
(43) Date de publication de la demande: 22.01.1997
(73) Titulaire: SEXTANT AVIONIQUE, 78141 Velizy Villacoublay (FR)
(72) Inventeur: Pain, Isabelle, 78350 Jouy en Josas (FR); Toillon, Patrice, 78230 Le Pecq (FR); Colas, Gérard, 78000 Versailles (FR)
(74) Mandataire: de Saint-Palais, Arnaud Marie

(56) Documents cités:
- EP-A- 0 184 976
- DE-A- 3 328 405

## Description

La présente invention concerne un dispositif d'interface conçu pour connecter un calculateur à architecture redondante et un moyen de communication, tel qu'un contrôleur de bus connecté à au moins un bus de transfert de données numériques.

Elle s'applique notamment, mais non exclusivement, aux calculateurs embarqués à bords des aérodynes, qui en raison du haut niveau de fiabilité et de sécurité requis, présentent une architecture redondante comportant plusieurs processeurs. De tels calculateurs sont raccordés, par l'intermédiaire d'un circuit de contrôle de bus, à un ensemble de bus leur permettant de communiquer avec les autres équipements électroniques de l'aérodyne.

Dans ce type d'application, il se pose le problème du raccordement des sorties des processeurs du calculateur au circuit de contrôle de bus. Ce problème peut être résolu par deux types de solutions.

Dans les solutions du premier type, chaque processeur émet des messages sur le bus d'une manière indépendante des autres processeurs. Etant donné que tous les processeurs exécutent les mêmes applications, ils élaborent les mêmes informations et donc émettent les mêmes messages sur le bus vers les mêmes destinataires. Les destinataires devront donc effectuer la réception de tous les messages sensés être identiques, les comparer, et les rejeter s'ils sont différents. Ces solutions impliquent donc une surcharge de traitement au niveau des destinataires et du circuit de contrôle de bus, une surcharge du bus, et un coût supplémentaire si l'on met en oeuvre un circuit de contrôle et un bus par processeur.

En outre, les programmes exécutés par les destinataires qui doivent inclure le contrôle des messages reçus, vont donc dépendre de l'architecture matérielle des émetteurs. Par conséquent, ces solutions manquent de souplesse en limitant les possibilités d'évolution des différents calculateurs.

Dans les solutions du second type, à deux processeurs redondants, les informations en sortie des processeurs du calculateur sont comparées, un seul message étant émis sur le bus lorsque les informations fournies par les processeurs sont identiques. Cette opération de comparaison est généralement effectuée par chaque processeur, mais un seul processeur a accès en émission au circuit de contrôle de bus, tandis que l'autre processeur a en général moyen d'invalider le circuit de contrôle de bus en cas de détection d'une divergence, ou peut indiquer aux destinataires par un moyen parallèle que les informations émises sur le bus sont invalides.

Ces solutions impliquent donc une surcharge de traitement au niveau des processeurs des émetteurs. Par ailleurs, étant donné que seul un processeur à accès en émission au circuit de contrôle, les programmes exécutés par les processeurs d'un même calculateur sont différents, ce qui entraîne un coût supplémentaire.

Par le document DE 33.28 405 on a également proposé un dispositif d'interface de bus composé de deux parties identiques, entre deux processeurs et un bus double. Ce dispositif vérifie les informations émises par les deux processeurs avant de les transmettre au bus, ces informations étant comparées et en cas d'inégalité, le dispositif d'interface se déconnecte du bus, ce qui entraîne la déconnexion des deux processeurs.

La présente invention a pour but de supprimer ces inconvénients. A cet effet, elle propose un dispositif d'interface conçu pour connecter un calculateur comprenant plusieurs processeurs redondants, à un contrôleur de bus relié à au moins un bus de transfert de données numériques.

Le dispositif d'interface est caractérisé en ce qu'il comprend :
- des moyens pour synchroniser et comparer les requêtes d'émission et de réception de blocs de données émises respectivement par les processeurs, et pour déclencher le traitement d'une requête lorsque celle-ci a été émise par tous les processeurs,
- des moyens pour transférer les blocs de données à émettre ou reçus par le contrôleur de bus, entre une mémoire d'échange du contrôleur de bus et les mémoires de travail respectives des processeurs, ladite mémoire d'échange étant connectée au dispositif d'interface, et
- des moyens pour comparer les blocs de données à émettre fournis respectivement par les processeurs et, pour déclencher le transfert d'un bloc de données s'il se trouve d'une manière identique en sortie de tous les processeurs, de la mémoire de travail d'un des processeurs vers la mémoire d'échange du contrôleur de bus, en vue de son émission sur le bus.

De cette manière, on a regroupé dans un dispositif distinct des processeurs de traitement, toutes les tâches de synchronisation des processeurs, de transfert de données entre les processeurs et le contrôleur de bus, et de contrôle d'intégrité, qui doivent être effectuées à chaque émission et réception de données par un ensemble de processeurs redondants. De ce fait, les processeurs du calculateur se trouvent complètement déchargés de ces tâches et les programmes exécutés par les processeurs peuvent ainsi être identiques et indépendants de l'architecture du calculateur, et la gestion de la redondance devient transparente au niveau des programmes.

D'autre part, le dispositif d'interface évite d'avoir à réaliser un couplage matériel très strict (cycle par cycle des processeurs) entre les processeurs de traitement.

Selon une particularité de l'invention, le dispositif d'interface comprend en outre des moyens pour contrôler l'intégrité de chaque bloc de données reçu par le contrôleur, et si le bloc de données reçu est intègre dans la mémoire d'échange, pour valider son transfert vers les mémoires de travail respectives des processeurs.

Grâce à cette disposition, les processeurs sont également déchargés du contrôle d'intégrité des informations reçues.

Selon une autre particularité de l'invention, le dispositif d'interface comprend des moyens pour calculer une signature sur chaque bloc de données émis par chaque processeur et reçu, pour comparer entre elles les signatures des blocs émis par chaque processeur, pour ajouter ladite signature à chaque bloc de données à émettre, pour comparer la signature calculée sur chaque bloc reçu avec celle contenue dans celui-ci et calculée par l'émetteur du bloc, et pour élaborer un mot d'état comprenant le résultat de ces comparaisons et un mot de contrôle élaboré et fourni par le contrôleur de bus, ce mot d'état étant transmis à tous les processeurs.

Ainsi chaque processeur peut contrôler la bonne exécution de ses requêtes d'émission et de réception.

Avantageusement, le dispositif selon l'invention est connecté à une mémoire de type FIFO dans laquelle sont stockées toutes les exceptions et interruptions émises par le contrôleur de bus, cette mémoire étant accessible sur requête émise par chaque processeur. De cette manière, les traitements effectués par les processeurs ne sont pas interrompus par le contrôleur de bus, l'acquisition des contextes d'exceptions et d'interruptions s'effectuant de manière différée et régulière par rapport aux traitements. Ceci est particulièrement avantageux dans le cas de certaines fonctions critiques qui doivent avoir un comportement temporel déterministe.

Un mode de réalisation du dispositif selon l'invention sera décrit ci-après, à titre d'exemple non limitatif, avec référence aux dessins annexés dans lesquels :
La figure 1 représente schématiquement un calculateur à deux processeurs redondants utilisant le dispositif d'interface selon l'invention ;
La figure 2 est un schéma bloc du dispositif d'interface ;
La figure 3 illustre un mode de réalisation d'un contrôleur de bus ;
Les figures 4 à 6 illustrent le fonctionnement du dispositif d'interface.

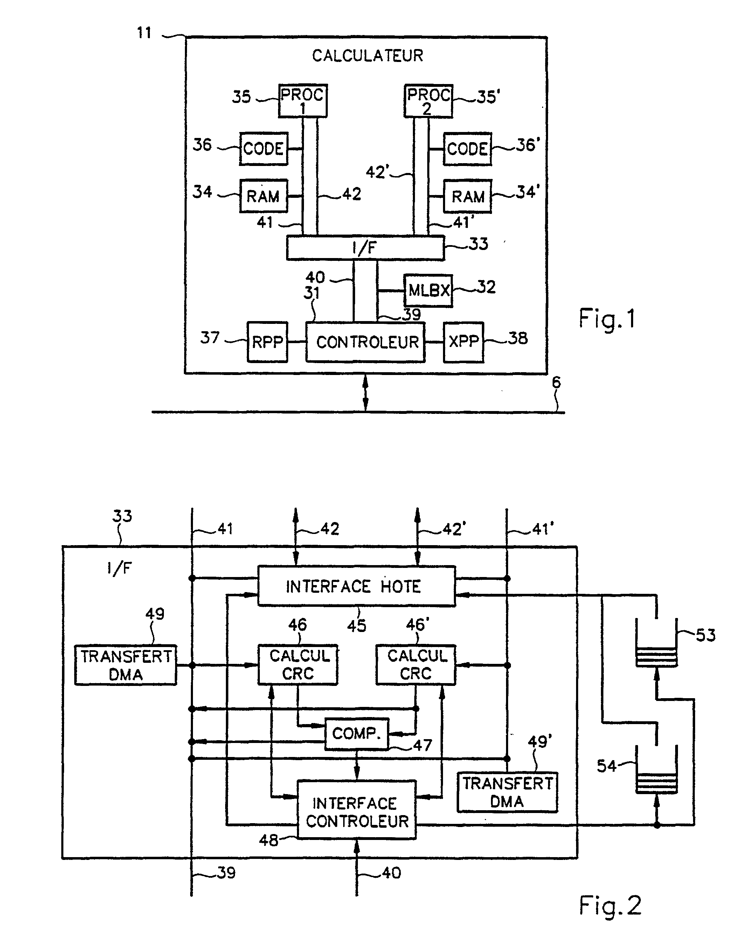

La figure 1 représente un calculateur 11, tel que ceux embarqués à bord d'un aérodyne. Il présente une architecture redondante à deux chaînes de traitement comprenant chacune un processeur 35,35' connecté par un bus processeur 41,41', à une mémoire 36,36' contenant le programme exécuté par le processeur, et à une mémoire de travail 34,34' contenant les données manipulées par le processeur.

Le calculateur 11 comprend également un contrôleur de bus 31 lui permettant de communiquer par l'intermédiaire d'au moins un bus externe 6, avec d'autres systèmes électroniques embarqués à bord de l'aérodyne.

Par ailleurs, afin d'établir la connexion des deux chaînes de traitement avec un contrôleur de bus commun, le calculateur 11 comprend un dispositif d'interface 33 connecté d'un côté aux processeurs 35,35' par l'intermédiaire des bus 41,41', et de lignes de transfert de signaux de contrôle 42,42', et de l'autre au contrôleur de bus 31 grâce à un bus 39 de transfert d'adresses et de données et un bus de contrôle 40. Une mémoire d'échange 32 raccordée au bus 39 permet de stocker les messages reçus et à émettre par le bus externe 6. Le dispositif d'interface 33 est, par exemple, intégré dans un ASIC.

Dans le cas d'un bus externe 6 de type ARINC 629, le contrôleur de bus 31 est connecté à deux mémoires non volatiles 37,38 dans lesquelles sont mémorisées toutes les informations décrivant les messages à émettre et à recevoir. En particulier, ces mémoires contiennent pour chaque bloc de données de chaque message, un numéro d'identification appelé "label", sa taille et son adresse de rangement dans la mémoire d'échange 32.

Selon la norme ARINC 629, les messages transmis par un tel bus sont constitués par une succession de un à 31 blocs appelés "wordstrings", chaque bloc comprenant un mot de label sur 20 bits identifiant l'émetteur du message et le contenu du bloc, suivi de 0 à 256 mots de données sur 20 bits. Le repérage des informations associées à un label ne se fait donc pas au niveau des messages, mais au niveau des blocs. Par conséquent, tous les services de transfert de données fournis par le contrôleur de bus 31 portent sur les blocs, et non pas sur les messages.
Ces blocs de données sont émis sur un canal du bus 6 au cours de trames périodiques, chaque terminal connecté au bus n'ayant le droit d'émettre qu'un seul message périodique au cours d'une trame, complété par des blocs de données apériodiques supplémentaires s'il reste du temps libre dans la trame.

Tel que représenté sur la figure 2, le dispositif d'interface 33 selon l'invention comprend :
- un circuit d'interface hôte 45 connecté à la fois aux lignes de contrôle 42,42' et aux bus 41,41' des deux processeurs 35,35', et assurant la synchronisation des requêtes émises par les deux processeurs 35,35' et la transmission aux processeurs de mots d'état de compte-rendu d'émission et de réception,
- deux circuits 46,46' de calcul de signature (par exemple de type somme de contrôle ou CRC : "Cyclic Redundancy Check") sur le contenu des blocs de données à émettre ou reçus par le contrôleur de bus 31, ces circuits de calcul étant affectés respectivement aux deux processeurs,
- un comparateur 47 permettant de vérifier l'égalité des signatures élaborées par les deux circuits de calcul 46,46', et ainsi de vérifier la cohérence des blocs émis respectivement par les deux processeurs 35,35',
- un circuit d'interface contrôleur 48 réalisant notamment l'élaboration d'un mot d'état de la dernière émission ou réception effectuée par le contrôleur de bus, et
- deux circuits de transfert DMA (Direct Memory Access) 49,49' permettant d'effectuer des transferts de données de mémoire à mémoire entre les mémoires de travail 34,34' des deux processeurs 35,35' et la mémoire d'échange 32.

Par ailleurs, étant donné que le dispositif d'interface 33 est connecté par trois bus 41,41',39, respectivement aux deux processeurs, et au contrôleur de bus 31, il travaille avec trois horloges distinctes, les deux premières étant respectivement celles des processeurs 35,35', et la troisième celle du contrôleur de bus 31.

Le circuit d'interface hôte 45 permet notamment de synchroniser toutes les requêtes d'émission ou de réception des processeurs 35,35'. A cet effet, lorsqu'il reçoit une première requête d'un processeur, il se met en attente avec temporisation d'une requête identique en provenance de l'autre processeur. Il compare ensuite la première requête à toutes les requêtes émises par l'autre processeur. Si l'autre processeur n'a pas émis une requête strictement identique à la première dans un certain délai, il envoie un signal d'erreur aux deux processeurs 35,35' sur les lignes de contrôle 42,42' et abandonne la première requête. Dans le cas contraire, il active le traitement de la requête.

Le circuit d'interface contrôleur 48 permet d'élaborer un état de la dernière émission ou réception effectuée par les processeurs 35,35'. A cet effet, il va rechercher dans la mémoire d'échange 32 le mot de contrôle associé au bloc de données émis ou reçu, mis à jour par le contrôleur de bus 31, et le complète avec le résultat des comparaisons entre la signature associée au bloc de données dans la mémoire d'échange et le résultat des calculs effectués par les circuits de calcul 46,46' sur le bloc de données.

Le mot de contrôle géré par le contrôleur de bus 31 indique notamment si le bloc de données a été rafraîchi depuis la dernière lecture, et si des erreurs sur le format des données reçues ont été détectées par le contrôleur de bus 31.

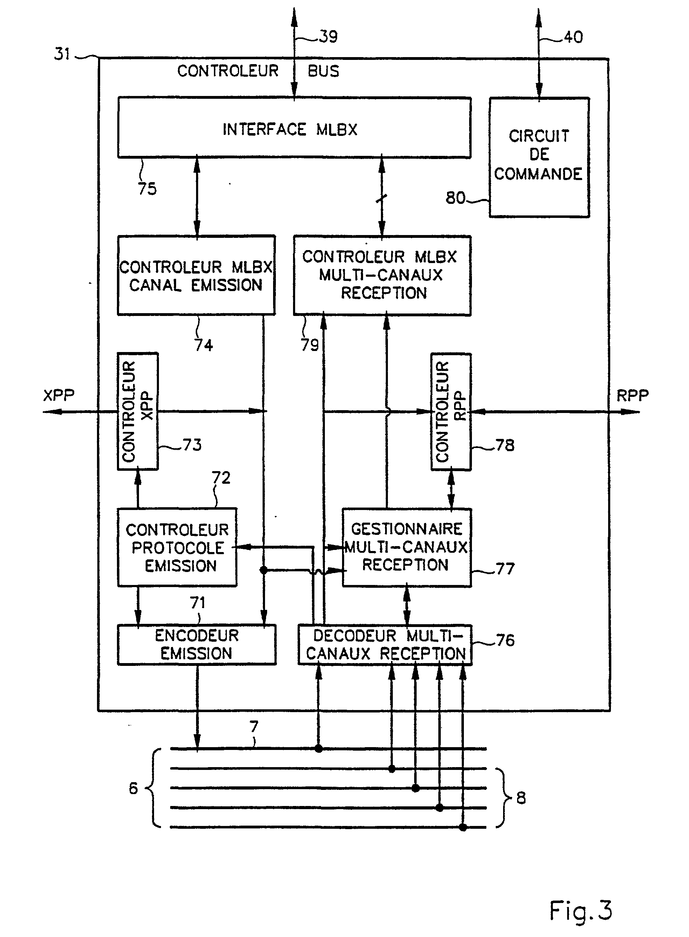

La figure 3 montre un exemple d'architecture fonctionnelle du contrôleur de bus 31, relié à un bus externe 6 comportant par exemple, un canal d'émission 7 et une pluralité de canaux de réception 8, chacun de ces canaux étant de type ARINC 629. UN tel contrôleur de bus comprend, pour l'émission de message sur le canal 7 du bus externe 6 :
- un circuit encodeur d'émission 71 connecté au canal d'émission 7, ce circuit réalisant le formatage, la sérialisation et l'encodage des informations à émettre,
- un circuit de contrôle de protocole d'émission 72 qui réalise la gestion du protocole (format temporel) de prise de décision d'émission des informations sur le bus, et le pilotage du format spatial des messages en émission,
- un circuit de contrôle 73 de la mémoire non volatile d'émission 38 contenant la description des messages à émettre, et l'adresse de ces derniers dans la mémoire d'échange 32, ce circuit de contrôle 73 effectuant la lecture des informations décrivant chaque bloc de données d'un message à émettre donné, contenues dans la mémoire non volatile XPP 38, et
- un circuit de contrôle en émission 74 de la mémoire d'échange 32, qui réalise la gestion en émission d'un circuit d'interface 75 pour l'acquisition et la surveillance des informations à émettre, le circuit d'interface 75 effectuant la gestion des différentes demandes d'accès à la mémoire d'échange 32 via le bus 39.

Le contrôleur 31 comprend, pour la réception des informations transitant sur les canaux de réception 8 du bus 6 :
- un circuit décodeur de réception multicanaux 76 conçu pour détecter l'activité de chaque canal, désérialiser les informations reçues sur chacun des canaux 8, et effectuer des surveillances de niveau physique et partiellement logique canal par canal,
- un circuit de gestion de réception multicanaux 77 qui effectue la gestion et la surveillance des mots de label et de donnée reçus sur chaque canal, ainsi que l'ordonnancement des traitements à effectuer pour la réception des informations transmises par chaque canal,
- un circuit de contrôle 78 de la mémoire non volatile de réception 37 contenant la description des blocs de données à recevoir, et l'adresse de ces derniers dans la mémoire d'échange 32, ce circuit de contrôle 78 effectuant la lecture des informations décrivant un bloc de données reçu par un canal, contenues dans la mémoire non volatile de réception 37, et
- un circuit de contrôle de réception 79 de la mémoire d'échange 32 qui réalise la gestion en réception du circuit d'interface 75 pour la fourniture et la surveillance des informations reçues.

Par ailleurs, le contrôleur 31 comprend un circuit de commande 80 qui permet à une entité externe de configurer, surveiller et commander les différents organes de l'unité de contrôle par l'intermédiaire du bus de contrôle 40.

Il convient de noter que le circuit décodeur de réception multicanaux 76 est également connecté au canal d'émission 7, de manière à recevoir les blocs de données émis par le circuit encodeur d'émission 71. Les informations à émettre utilisées par le-circuit encodeur d'émission 71 sont également fournies directement au circuit de gestion de réception multi-canaux 77, de manière à permettre le contrôle de la qualité de l'émission par comparaison des données émises avec celles lues simultanément sur le bus.

Un tel contrôleur de bus 31 peut avantageusement être intégré dans un ASIC.

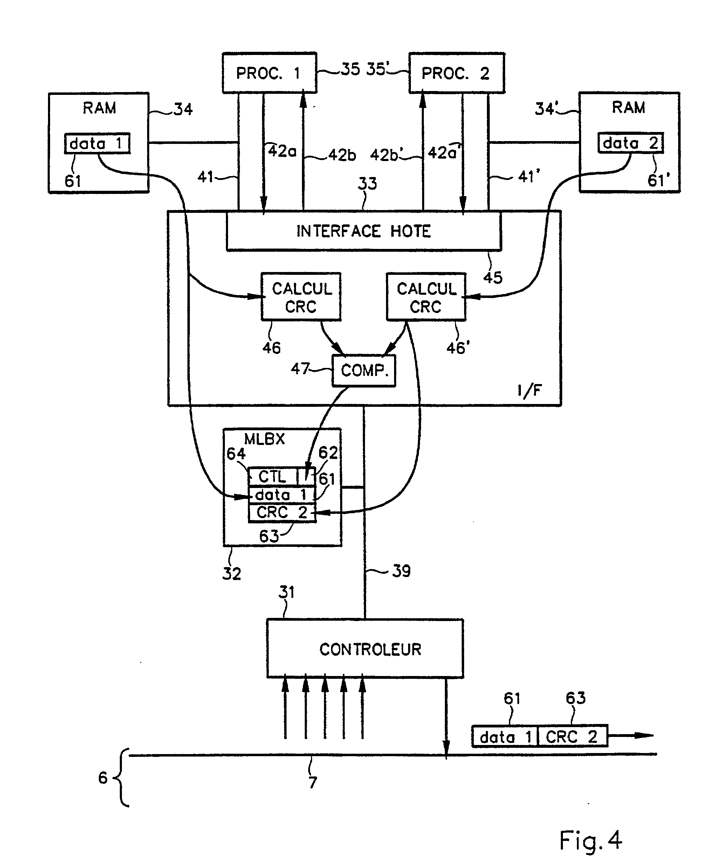

Les figures 4 à 6 illustrent le fonctionnement du dispositif d'interface 33, respectivement à la suite de requêtes d'émission, de contrôle d'émission et de réception, émises par les processeurs 35,35'.

Sur la figure 4, lorsque le circuit d'interface hôte 45 a reçu deux requêtes d'émission strictement identiques sur les lignes de contrôle 42a,42a', en provenance des deux processeurs 35,35', il active les circuits 49,49' pour effectuer le transfert DMA du bloc de données 61,61' désigné dans les requêtes, des mémoires de travail 34,34' vers le circuits de calcul 46,46', et de la mémoire de travail 34 du processeur 35 vers la mémoire d'échange 32 à l'adresse indiquée dans les requêtes d'émission. Parallèlement, les circuits de calcul 46,46' effectuent le calcul de signature sur les données à émettre, et les signatures ainsi calculées sont appliquées à l'entrée du comparateur 47, la signature 63 calculée par le second circuit de calcul 46' étant inscrite dans la mémoire d'échange en association avec le bloc 61 à transmettre.

Ainsi, l'information qui sera émise sur le bus sera constituée par le bloc de données 61 élaboré par le processeur 35 et par la signature 63 calculée par le circuit de calcul 46' à partir du bloc de données 61' élaborée par le processeur 35'. Ainsi, même en cas de panne du comparateur 47, élément unique qui alors ne détecterait pas une divergence entre les données émises par les processeurs 35,35', et laisserait donc partir un bloc de données non valide, le récepteur pourra détecter l'erreur, car la signature 63 ne sera pas compatible avec le bloc de données 61.

Si les signatures calculées par les deux circuits 46,46' sont identiques, le comparateur 47 valide l'émission en indiquant le rafraîchissement par l'intermédiaire d'un bit de rafraîchissement 62 dans le mot de contrôle 64 associé au bloc à transmettre 61 dans la mémoire d'échange 32. Le contrôleur de bus 31 vient consulter ce mot de contrôle 64 au moment où le bloc de données devra être émis sur le bus, constate alors que ce bit de rafraîchissement 62 a été positionné, et donc émet le bloc de données 61 auquel est associé la signature 63 sur le canal d'émission 7 du bus 6. Par contre, si les signatures calculées par les deux circuits 46,46' sont différentes, l'erreur est consignée par le circuit d'interface contrôleur 48 qui élabore un mot d'état transmis aux processeurs 35,35' par le circuit d'interface hôte 45 sur les lignes de contrôle 42b,42b'.

Selon la norme ARINC 629, le contrôleur de bus 31 est à l'écoute du canal d'émission 7 pour recevoir le message qu'il vient d'émettre, de manière à permettre de contrôler que l'émission s'est correctement déroulée. A cet effet, le contrôleur de bus 31 peut remonter dans une zone de réception de la mémoire d'échange 32 le bloc de données 61 et la signature 63 qu'il a reçus, et mettre à jour le mot de contrôle 64 donnant le résultat d'un certain nombre de tests de bas niveau effectués lors de la ré-écoute du bloc de données émis.

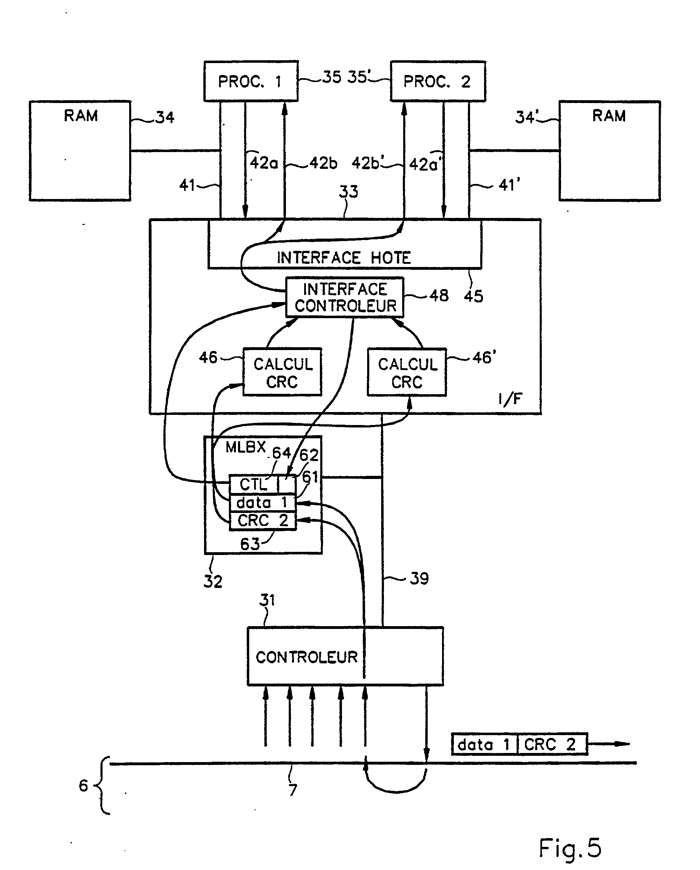

Comme l'illustre la figure 5, le dispositif d'interface 33 permet aux processeurs 35,35' de déterminer l'état d'une émission effectuée par le contrôleur de bus 31.
Pour cela, les deux processeurs doivent envoyer au dispositif d'interface 33 une requête de contrôle d'émission pour un bloc de données indiqué. Lorsque le circuit d'interface hôte 45 reçoit deux requêtes de contrôle d'émission identiques en provenance respectivement des deux processeurs 35,35', et dans la mesure où le bit de rafraîchissement en réception 62 dans la mémoire d'échange 32 est activé, correspondant à une réception effective du bloc de données, il active les circuits de transfert DMA 49,49' pour transférer le bloc de données 61 et la signature 63 reçus de la mémoire d'échange 32 vers les circuits de calcul 46,46' qui calculent la signature sur le bloc de données 61 et la comparent avec la signature 63 associée. Les résultats des comparaisons sont envoyés au circuit d'interface contrôleur 48 qui élabore un mot d'état d'émission à partir du mot de contrôle 64 lu dans la mémoire d'échange 32 et des résultats des comparaisons. Ensuite, le circuit d'interface contrôleur 48 met à zéro le bit de rafraîchissement 62 dans la mémoire d'échange 32, et envoie le mot d'état ainsi élaboré aux processeurs 35,35' sur les lignes de contrôle 42b,42b' par l'intermédiaire du circuit d'interface hôte 45.

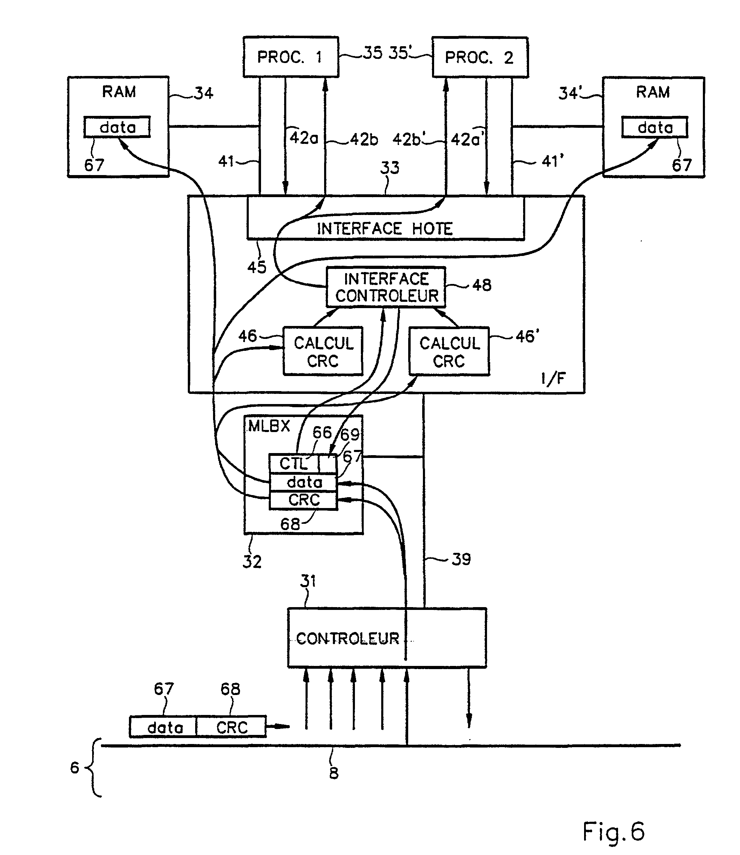

Sur la figure 6, lorsque le circuit d'interface hôte 45 reçoit deux requêtes de réception identiques en provenance respectivement des deux processeurs 35,35', et dans la mesure où le bit de rafraîchissement en réception 69 du mot de contrôle 66 est activé dans la mémoire d'échange 32, correspondant à une réception effective du bloc de données, il active les circuits de transfert DMA 49,49' pour transférer le bloc de données 67 reçu de la mémoire d'échange 32 vers les mémoires de travail 34,34', et le bloc de données 67 et la signature 68 reçue, vers les circuits de calcul de signature 46,46'. Ces deux circuits effectuent alors le calcul de la signature sur le bloc de données 67, comparent le résultat obtenu à la signature reçue 68, et transmettent le résultat de la comparaison au circuit d'interface contrôleur 48 qui va lire dans la mémoire d'échange 32, le mot de contrôle 66 associé au bloc de donnée reçu 67. Ensuite, le circuit d'interface contrôleur 48 élabore un mot d'état de réception regroupant le mot de contrôle 66 et les résultats des comparaisons, qui est transmis au circuit d'interface hôte 45, et désactive le bit de rafraîchissement 69 dans la mémoire d'échange 32.

Pour ne pas avoir à interrompre les applications exécutées par les processeurs 35,35', on a prévu un mode de réception différé dans lequel les zones de mémorisation des blocs de données reçus sont gérées en zone tampon tournante, permettant ainsi de différer la lecture des données par les processeurs 35,35', sans risque d'écrasement des données.

En réception différée, le contrôleur de bus 31 tient à jour un indice de réception dans la mémoire d'échange 32 donnant le nombre de blocs de données en réception mis à jour dans la mémoire d'échange 32. Parallèlement, les deux processeurs 35,35' doivent tenir à jour un indice de lecture correspondant au nombre de blocs de données lus dans la mémoire d'échange 32. La différence entre ces deux indices donne le nombre de blocs de données restant à lire, au modulo près de la taille en nombre de blocs de la zone tampon tournante. Par ailleurs, les cas d'écrasement de blocs de données sont gérés par le contrôleur de bus 31 grâce au bit d'écrasement contenu dans le mot de contrôle associé à chaque bloc de données dans la mémoire d'échange 32.

Pour vider une zone tampon tournante, les deux processeurs 35,35' doivent envoyer au dispositif d'interface 33 une requête de lecture de l'indice de réception dans la mémoire d'échange 32. Lorsque le circuit d'interface hôte 45 reçoit deux requêtes identiques des deux processeurs 35,35', il présente sur les bus 41,41' l'indice de réception lu dans la mémoire d'échange 32. En fonction de l'écart entre les indices gérés par les processeurs 35,35' et l'indice lu dans la mémoire d'échange 32, les processeurs peuvent savoir s'il y a au moins un bloc de données à lire dans la mémoire d'échange 32.
Chaque processeur émet alors une requête de réception associée à une adresse de lecture dans la mémoire d'échange égale à l'adresse de base de la zone tampon additionnée de l'indice de lecture multiplié par la taille d'un bloc.
Pour vider toutes les zones tampons, les deux processeurs 35,35' doivent recommencer la lecture de l'indice de réception et la réception des blocs de données stockés dans la mémoire d'échange 32. Ces opérations sont par exemple effectuées à chaque début de trame.

En outre, afin d'éviter que les processeurs 35,35' aient à examiner toutes les zones tampons de la mémoire d'échange 32 à chaque trame, le dispositif d'interface 33 enregistre dans une pile 53 de type FIFO la signalisation fournie par l'unité de contrôle 31 de tous les labels reçus, en leur associant éventuellement une date de réception. En accédant à cette pile 53, les processeurs 35,35' peuvent ainsi déterminer quels sont les blocs reçus pendant la dernière trame.

A cet effet, sur réception d'un signal par le bus de contrôle 40 indiquant que le contrôleur 31 travaille en mode réception différée, le circuit d'interface contrôleur 48 s'active et récupère sur le bus 39 d'accès à la mémoire d'échange 32, l'adresse d'accès dans cette mémoire qui définit de manière unique la zone tampon.

Toujours pour éviter d'interrompre les traitements effectués par les processeurs 35,35', le dispositif d'interface 33 mémorise les contextes d'exception et d'interruption dans une seconde pile 54, de type FIFO. Ces exceptions et interruptions sont émises par le contrôleur 31, et sont par exemple de type, exception sur émission ou réception, exception au niveau du contrôleur de bus 31, exception au niveau de l'accès aux mémoires 37,38 et 32, interruption sur début ou fin d'émission ou de réception.
En cas d'exception ou d'interruption, le contrôleur de bus 31 émet un signal vers le dispositif d'interface 33 avec encodage du type d'exception ou d'interruption associé à un numéro de canal. En fonction de cette information, le circuit d'interface contrôleur 48 accède en lecture aux registres du contrôleur 31 correspondant au type d'exception ou d'interruption, et au numéro de canal par le bus de contrôle 40, et mémorise dans la pile 54 les informations obtenues, à savoir :
- le type d'exception ou d'interruption et l'identification de ou des erreurs,
- le numéro de canal et la valeur du label associé à l'exception ou à l'interruption, et
- le vecteur d'interruption.

Pour accéder aux piles 53,54, les deux processeurs 35,35' doivent émettre une requête de lecture d'une pile 53,54, adressée au dispositif d'interface 33 qui, après traitement par le circuit d'interface hôte 45, présente la donnée la plus ancienne d'une pile sur les bus processeurs 41,41'.
Ces piles 53,54 sont vidées, par exemple à chaque début de trame.

Le circuit d'interface hôte 45 permet en outre de synchroniser les deux processeurs 35,35' avec le contrôleur de bus 31, de manière à réduire au minimum l'écart entre l'instant d'élaboration des informations et l'instant d'émission de celles-ci par le contrôleur de bus 31. Ce mécanisme permet de synchroniser le séquencement des traitements avec le déroulement de la trame sur bus externe 6.
A cet effet, Le contrôleur de bus 31 émet un signal à chaque début de trame qui réveille le circuit d'interface contrôleur 48. Le circuit d'interface contrôleur 48 peut alors récupérer sur le bus de contrôle 40, l'adresse générée par le contrôleur 31 dans la mémoire non volatile d'émission 38, et qui correspond à l'adresse des descripteurs du prochain message à émettre. Une interruption de séquencement accompagnée de l'adresse des descripteurs du message à émettre est alors transmise aux deux processeurs 35,35', qui doivent normalement être en attente de cette interruption. Si-cette interruption arrive en dehors d'une fenêtre temporelle prévue à cet effet, on se trouve en présence d'une panne de synchronisation d'un ou des deux processeurs par rapport au contrôleur 31 et un traitement de reprise doit être effectué.

## Revendications

1. Dispositif d'interface (33) conçu pour connecter un calculateur comprenant plusieurs processeurs redondants (35, 35'), à un contrôleur de bus (31) relié à au moins un bus de transfert (6) de données numériques,
caractérisé en ce qu'il comprend :
- des moyens (45) pour synchroniser et comparer les requêtes d'émission et de réception de blocs de données émises respectivement par les processeurs (35, 35'), et pour déclencher le traitement d'une requête lorsque celle-ci a été émise par tous les processeurs (35, 35'),
- des moyens (49, 49') pour transférer les blocs de données à émettre ou reçus par le contrôleur de bus (31), entre une mémoire d'échange (32) du contrôleur de bus (31) et les mémoires de travail (34, 34') respectives des processeurs (35, 35'), ladite mémoire d'échange (32) étant connectée au dispositif d'interface et
- des moyens (46, 46', 47) pour comparer les blocs de données à émettre fournis respectivement par les processeurs (35, 35') et, pour déclencher le transfert d'un bloc de données s'il se trouve d'une manière identique en sortie de tous les processeurs (35, 35'), de la mémoire de travail (34) d'un des processeurs (35, 35') vers la mémoire d'échange (32) du contrôleur de bus (31), en vue de son émission sur le bus (6).

2. Dispositif d'interface selon la revendication 1,
caractérisé en ce qu'il comprend des moyens pour contrôler l'intégrité de chaque bloc de données reçu par le contrôleur (31), et si le bloc de données est intègre dans la mémoire d'échange (32), pour valider son transfert vers les mémoires de travail (34, 34') respectives des processeurs (35, 35').

3. Dispositif d'interface selon la revendication 1 ou 2,
caractérisé en ce qu'il comprend des moyens pour calculer (46, 46') une signature sur chaque bloc de données émis par chaque processeur (35, 35') et reçu, pour comparer (47) entre elles les signatures des blocs émis par chaque processeur (35,35'), pour ajouter ladite signature à chaque bloc de données à émettre, pour comparer la signature calculée sur chaque bloc reçu avec celle contenue dans celui-ci et calculée par l'émetteur du bloc, et pour élaborer (48) un mot d'état comprenant le résultat de ces comparaisons et un mot de contrôle élaboré et fourni par le contrôleur (31) de bus (6), ce mot d'état étant transmis à tous les processeurs (35,35').

4. Dispositif d'interface selon l'une des revendications précédentes,
caractérisé en ce qu'il est connecté à une première mémoire (54) de type FIFO dans laquelle sont stockés tous les contextes d'exceptions et d'interruptions émis par le contrôleur (31) de bus (6), cette mémoire (54) étant accessible sur requête appliquée par tous les processeurs (35,35') aux moyens de synchronisation (45).

5. Dispositif d'interface selon l'une des revendications précédentes,
caractérisé en ce qu'il est connecté à une seconde mémoire (53) de type FIFO dans laquelle sont stockés les codes d'identification des blocs de données reçus par le contrôleur (31) de bus (6), cette mémoire (53) étant accessible sur requête appliquée par tous les processeurs (35,35') aux moyens de synchronisation (45).

6. Dispositif d'interface selon l'une des revendications précédentes,
caractérisé en ce que les moyens de synchronisation (45) permettent de synchroniser les processeurs (35,35') avec le contrôleur (31) de bus (6), de manière réduire au minimum l'écart entre l'instant d'élaboration des informations à émettre par les processeurs (35,35') et l'instant d'émission effective de celles-ci sur le bus (6) par le contrôleur (31).

7. Dispositif d'interface selon l'une des revendications 3 à 6,
caractérisé en ce que le contrôleur (31) de bus (6) comprend des moyens (72 à 80) pour recevoir le bloc de données (61) qu'il vient d'émettre sur le bus (6), les moyens de synchronisation (45) permettant d'exécuter une requête de contrôle d'émission émise par tous les processeurs (35,35'), déclenchant les moyens pour calculer (46,46') une signature sur le bloc de données ainsi reçu, et pour la comparer à la signature (63) associée au bloc de données (61) émis et relu sur le bus, et stocké dans la mémoire d'échange (32), le résultat de cette comparaison étant transmis aux moyens pour élaborer (48) un mot d'état.

8. Dispositif d'interface selon l'une des revendications 4 à 7,
caractérisé en ce que la première mémoire (54) de type FIFO est mise à jour par les moyens d'élaboration (48) qui sont conçus pour accéder aux registres du contrôleur (31) de bus (6) dans lequel sont mémorisées les informations relatives au contexte d'exception ou d'interruption.

9. Dispositif d'interface selon l'une des revendications précédentes,
caractérisé en ce que les blocs de données sont émis sur le bus (6) à l'intérieur de trames périodiques, les moyens d'élaboration (48) étant conçus pour recevoir et traiter un signal émis à chaque début de trame par le contrôleur (31) de bus.

10. Dispositif selon l'une des revendications 5 à 9,
caractérisé en ce que le contrôleur (31) de bus comprend un mode de réception différé, et émet un signal lorsqu'il effectue une réception d'un bloc de données dans ce mode, ce signal étant reçu par les moyens d'élaboration (48) qui accèdent aux informations relatives à l'identification du bloc de données reçu et à l'adresse de stockage de ce bloc dans la mémoire d'échange (32), manipulés par le contrôleur (31) lors de la réception du bloc de données en mode différé, les moyens d'élaboration (48) inscrivant ces informations dans la seconde mémoire (53) de type FIFO.

11. Dispositif selon l'une des revendications précédentes,
caractérisé en ce qu'il est intégré dans un ASIC.

## Patentansprüche

1. Schnittstellenvorrichtung (33), die zum Anschließen eines Rechners mit mehreren redundanten Prozessoren (35, 35') an eine Bussteuerung (31) vorgesehen ist, die mit mindestens einem Bus (6) zur Übertragung digitaler Daten verbunden ist, dadurch gekennzeichnet, daß die Schnittstellenvorrichtung folgendes umfaßt:
- Mittel (45) zum Synchronisieren und Vergleichen der Anfragen zum Senden und zum Empfang von Datenblöcken, die jeweils von den Prozessoren (35, 35') gesendet werden, und zum Auslösen der Verarbeitung einer Anfrage, wenn diese von allen Prozessoren (35, 35') gesendet wird,
- Mittel (49, 49') zum Übertragen der Datenblöcke, die von der Bussteuerung (31) zu senden sind oder empfangen werden, zwischen einem Austauschspeicher (32) der Bussteuerung (31) und den jeweiligen Arbeitsspeichern (34, 34') der Prozessoren (35, 35'), wobei der Austauschspeicher (32) an die Schnittstellenvorrichtung angeschlossen ist, und
- Mittel (46, 46', 47) zum Vergleichen der zu sendenden Datenblöcke, die jeweils von den Prozessoren (35, 35') geliefert werden, und zum Auslösen der Übertragung eines Datenblocks, wenn er am Ausgang aller Prozessoren (35, 35') identisch vorliegt, vom Arbeitsspeicher (34) eines der Prozessoren (35, 35') zum Austauschspeicher (32) der Bussteuerung (31), um ihn auf dem Bus (6) zu senden.

2. Schnittstellenvorrichtung nach Anspruch 1; dadurch gekennzeichnet, daß sie mit Mitteln zur Kontrolle der Vollständigkeit jedes von der Steuerung (31) empfangenen Datenblocks und zur Freigabe seiner Übertragung an die entspreohenden Arbeitsspeicher (34, 34') der Prozessoren (35, 35'), wenn der Datenblock im Austauschspeicher (32) vollständig vorliegt, versehen ist.

3. Schnittstellenvorrichtung nach Anspruch 1 oder 2, dadurch gekennzeichnet, daß sie folgendes aufweist: Mittel (46, 46') zum Berechnen einer Signatur auf jedem Datenblock, der von jedem Prozessor (35, 35') gesendet und empfangen wird, zum Vergleichen (47) der Signaturen der von jedem Prozessor (35, 35') gesendeten Blöcke untereinander, zum Hinzufügen dieser Signatur zu jedem zu sendenden Datenblock, zum Vergleichen der berechneten Signatur auf jedem empfangenen Block mit der in diesem enthaltenen und vom Sender des Blocks berechneten, und zum Erzeugen eines Statuswortes (48), welches das Ergebnis dieser Vergleiche enthält, sowie eines Steuerwortes, das von der Steuerung (31) des Busses (6) erzeugt und geliefert wird; wobei dieses Statuswort an alle Prozessoren (35, 35') übertragen wird.

4. Schnittstellenvorrichtung nach einem der vorhergehenden Ansprüche, dadurch gekennzeichnet, daß sie an einen ersten Speicher (54) vom Typ FIFO angeschlossen ist, in dem alle Kontexte von Ausnahmen und Unterbrechungen gespeichert sind, die von der Steuerung (31) des Busses (6) gesendet werden, wobei dieser Speicher (54) durch eine Anforderung zugänglich ist, die von allen Prozessoren (35, 35') auf die Synchronisationsmittel (45) angewandt wird.

5. Schnittstellenvorrichtung nach einem der vorhergehenden Ansprüche, dadurch gekennzeichnet, daß sie an einen zweiten Speicher (53) vom Typ FIFO angeschlossen ist, in dem die Identifikationscodes der Datenblöcke gespeichert sind, die von der Steuerung (31) des Busses (6) empfangen werden, wobei dieser Speicher (53) durch eine Anforderung zugänglich ist, die von allen Prozessoren (35, 35') auf die Synchronisationsmittel (45) angewandt wird.

6. Schnittstellenvorrichtung nach einem der vorhergehenden Ansprüche, dadurch gekennzeichnet, daß die. Synchronisationsmittel (45) es gestatten, die Prozessoren (35, 35') mit der Steuerung (31) des Busses (6) zu synchronisieren, um die Verzögerung zwischen dem Augenblick der Erzeugung der von den Prozessoren (35, 35') zu sendenden Informationen und dem Augenblick des tatsächlichen Sendens derselben auf dem Bus (6) durch die Steuerung (31) auf ein Minimum zu verringern.

7. Schnittstellenvorrichtung nach einem der Ansprüche 3 bis 6, dadurch gekennzeichnet, daß die Steuerung (31) des Busses (6) Mittel (72 bis 80) zum Empfangen des Datenblocks (61) aufweist, den sie gerade auf dem Bus (6) gesendet hat, wobei die Synchronisationsmittel (45), die es erlauben, eine Sende-Kontrollanfrage auszuführen, die von allen Prozessoren (35, 35') gesendet wird und welche die Mittel zum Berechnen einer Signatur auf dem so empfangenen Datenblock (46, 46') sowie zum Vergleichen derselben mit der Signatur (63) aktiviert, die dem Datenblock (61) zugeordnet ist, der auf dem Bus gesendet und wiedergelesen und im Austauschspeicher (32) gespeichert wird, wobei das Ergebnis dieses Vergleichs an die Mittel zum Erzeugen eines Statuswortes (48) übertragen wird.

8. Schnittstellenvorrichtung nach einem der Ansprüche 4 bis 7, dadurch gekennzeichnet, daß der erste Speicher (54) vom Typ FIFO durch die Erzeugungsmittel (48) aktualisiert wird, die dazu eingerichtet sind, auf die Register der Steuerung (31) des Busses (6) zuzugreifen, in dem die Informationen gespeichert sind, die den Ausnahmen- oder Unterbrechungs-Zusammenhang betreffen.

9. Schnittstellenvorrichtung nach einem der vorhergehenden Ansprüche, dadurch gekennzeichnet, daß die Datenblöcke auf dem Bus (6) innerhalb von Zeitrahmen gesendet werden, wobei die Erzeugungsmittel (48) dazu eingerichtet sind, ein Signal zu empfangen und zu verarbeiten, das am Anfang jedes Rahmens von der Steuerung (31) des Busses gesendet wird.

10. Vorrichtung nach einem der Ansprüche 5 bis 9, dadurch gekennzeichnet, daß die Steuerung (31) des Busses einen rechnerunabhängigen Empfangsmodus aufweist und ein Signal sendet, wenn sie den Empfang eines Datenblocks in diesem Modus durchführt, wobei dieses Signal von den Erzeugungsmitteln (48) empfangen wird, die auf die Informationen zugreifen, welche die Identifikation des empfangenen Datenblocks und die Speicheradresse dieses Blocks im Austauschspeicher (32) betreffen und von der Steuerung (31) beim Empfang des Datenblocks im rechnerunabhängigen Modus verarbeitet werden, wobei die Erzeugungsmittel (48) diese Informationen in einen zweiten Speicher (53) vom Typ FIFO schreiben.

11. Vorrichtung nach einem der vorhergehenden Ansprüche, dadurch gekennzeichnet, daß sie in eine ASIC integriert ist.

## Claims

1. An interfacing device (33) designed to connect a computer comprising plural redundant processors (35, 35'), to a bus controller (31) connected to at least one digital data transfer bus (6), said device comprising:
- a means (45) for synchronizing and comparing the data block transmission and reception requests respectively transmitted by said processors (35, 35'), and for triggering processing of a request when the latter has been transmitted by all the processors (35, 35'),
- a means (49, 49') for transferring the data blocks to be transmitted or received by the bus controller (31), between an exchange memory of the bus controller(31) and the respective working memories (34, 34') of said processors (35, 35'), said exchange memory (32) being connected to the interfacing device and,
- a means (46, 46', 47) for comparing the data blocks to be transmitted respectively supplied by said processors (35, 35'), and for triggering the transfer of a data block if the latter is situated identically at the outputs of all said processors (35, 35'), from the working memory (34) of one of said processors (35, 35') to the exchange memory (32) of the bus controller (31) with a view to transmission thereof on the bus (6).

2. The interfacing device according to claim 1, characterised in that it comprises a means for checking the integrity of each data block received by the controller (31), and if said data block is integral in the exchange memory (32), for validating transfer thereof towards the respective working memories (34, 34') of the processors (35, 35').

3. The interfacing device according to claim 1 or 2, characterised in that it comprises a means for computing (46, 46') a signature on each data block transmitted by each processor (35, 35') and received, for comparing (47) with one another the signatures of the blocks transmitted by each processor (35, 35'), for adding said signature to each data block to be transmitted, for comparing the signature computed on each block received with the signature contained in said block and computed by the transmitter of the block, and for working out (48) a status word including the result of these comparisons and a check word generated and supplied by the controller (31) of the bus (6), said status word being transmitted to all said processors (35, 35').

4. The interfacing device according to one of the preceding claims, characterised in that it is connected to a first FIFO type memory (54) in which are stored all the exceptions and interruptions transmitted by the controller (31) of the bus (6), this memory (54) being accessible on request transmitted by all the processors (35, 35') to the synchronizing means (45).

5. The interfacing device according to one of the preceding claims, characterised in that it is connected to a second FIFO type memory (53) in which are stored the identification codes of the data blocks received by the controller (31) of the bus (6), this memory (53) being accessible on request transmitted by all the processors (35, 35') to the synchronizing means (45).

6. The interfacing device according to one of the preceding claims, characterised in that the synchronizing means (45) enables the processors (35, 35') to be synchronised with the controller (31) of the bus (6) so as to reduce to a minimum the variance between the moment the data are generated by the processors(35, 35') and the moment they are effectively transmitted on the bus (6) by the controller (31).

7. The interfacing device according to one of the preceding claims 3 to 6, characterised in that the controller (31) of the bus (6) comprises a means (72 to 80) for receiving the data block (61) it has just transmitted on the bus (6), the synchronizing means (45) enabling the performance of a transmission check request transmitted by all the processors (35, 35'), triggering the computing means (46, 46') to compute a signature on the data block (61) thus received, and to compare said signature (63) with the signature associated with the data block (61) transmitted and reread on the bus, and stored in the exchange memory (32), the result of this comparison being transmitted to the means for generating (48) a status word.

8. The interfacing device according to one of the preceding claims 4 to 7, characterised in that the first FIFO type memory (54) is updated by the generating means (48) which is designed to access the registers of the controller (31) of the bus (6) in which the data pertaining to the exception or interruption context are stored.

9. The interfacing device according to one of the preceding claims, characterised in that the data blocks are transmitted on the bus (6) within periodic frames, the generating means (48) being designed to receive and process a signal emitted by the bus controller (31) at the start of each frame.

10. The device according to one of the preceding claims 5 to 9, characterised in that the controller (31) of the bus comprises a deferred reception mode, and emits a signal when it receives a data block in this mode, said signal being received by the generating means (48) which accesses the data pertaining to the identification of said data block received and at the storage address of said block in the exchange memory (32), manipulated by the controller (31) when said data block is received in said deferred reception mode, said generating means (48) inscribing these data in the second FIFO type memory (53).

11. The device according to one of the preceding claims, characterised in that it is integrated in an ASIC.
